(19) Europäisches Patentamt
European Patent Office
Office européen des brevets

(11) Veröffentlichungsnummer: **0 123 199**
**B1**

# (12) EUROPÄISCHE PATENTSCHRIFT

(45) Veröffentlichungstag der Patentschrift: **16.09.87**

(51) Int. Cl.⁴: **C 07 F 9/38,** C 08 F 30/02

(21) Anmeldenummer: **84103978.7**

(22) Anmeldetag: **10.04.84**

(54) **2-Methacrylamido-2-methyl-propanphosphonsäure und ihre Salze, Verfahren zu deren Herstellung und ihre Verwendung zur Herstellung von Copolymeren.**

(30) Priorität: **16.04.83 DE 3313819**

(43) Veröffentlichungstag der Anmeldung: **31.10.84 Patentblatt 84/44**

(45) Bekanntmachung des Hinweises auf die Patenterteilung: **16.09.87 Patentblatt 87/38**

(84) Benannte Vertragsstaaten: **AT BE CH DE FR GB IT LI NL SE**

(56) Entgegenhaltungen:
**EP - A - 0 089 654**

**CHEMICAL ABSTRACTS, Band 81, Nr. 24, 16. Dezember 1974, Seite 35, Nr. 153194p, Columbus, Ohio, USA; N.N. KUZNETSOVA et al.: "Synthesis of ion exchangers *containing phosponic acid groups*"**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Weiss, Erwin, Dr., Gundelhardtstrasse 2, D-6233 Kelkheim (Taunus) (DE)**
Erfinder: **Rupp, Walter, Dr., Am Eichkopf 6, D-6240 Königstein/Taunus (DE)**

**EP 0 123 199 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Methacrylamidoalkan-sulfonsäuren und-phosphonsäuren sind bereits bekannt (EP-PS 10 335 und Chemical Abstracts, Band 81, Nr. 24, 16.12.74, Seite 35, Nr. 153194 p.) Da Interesse an ähnlichen polymerisierbaren Phosphonsäuren mit entsprechenden bzw. erweiterten anwendungstechnischen Eigenschaften, insbesondere einer erhöhten Hydrolysestabilität der Amidbindung besteht, wurde die 2-Methacrylamido-2-methyl-propanphosphonsäure hergestellt, die noch nicht bekannt war.

Gegenstand der Erfindung ist 2-Methacrylamido-2-methyl-propanphosphonsäure der Formel

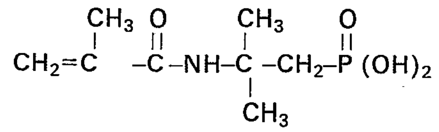

I

und ihre Salze.

Die 2-Methacrylamido-2-methyl-propanphosphonsäure lässt sich nach dem Prinzip der «Ritter-Reaktion» aus Methacrylnitril und 2-Methylprop-1-en-1-phosphonsäure oder der isomeren 2-Methylprop-2-en-1-phosphonsäure wie auch aus Gemischen der beiden Phosphonsäuren in Gegenwart starker Säuren wie z.B. $H_2SO_4$, $H_3PO_4$, $HClO_4$, HF nach folgendem Reaktionsschema herstellen:

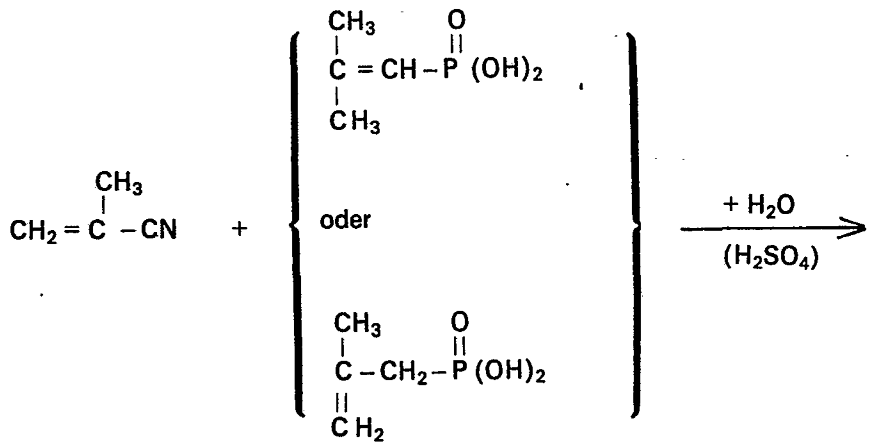


I

Die dabei verwendeten 2-Methyl-prop-1-en bzw. 2-Methyl-prop-2-en-1-phosphonsäuren lassen sich durch Hydrolyse der entsprechenden Phosphonsäuredichloride bequem herstellen. Diese 2-Methylpropen-1-phosphonsäuredichloride sind bereits ausführlich in der Literatur beschrieben [U.S. Patent 2 471 472; L. Maier, Phosphorus 5, 223 (1975)].

Die Umsetzung des Isomerengemisches der 2-Methyl-propen-1-phosphonsäuren mit Methacrylnitril erfolgt etwa im Molverhältnis 1:1. Ein zusätzliches Lösungsmittel ist nicht notwendig, jedoch dient ein Überschuss an der für die Umsetzung erforderlichen starken Mineralsäure bzw. an Methacrylnitril ggfs. gleichzeitig als Lösungsmittel.

Die Reaktionstemperaturen betragen +10 °C bis 90 °C, bevorzugt werden die Temperaturen während der Reaktionszeit von etwa Raumtemperatur auf etwa 60–70 °C gegen Ende zu erhöht. Die Reaktionszeit beträgt 1 h bis mehrere Tage, vorzugsweise 12–24 Stunden.

Als starke Mineralsäuren kommen die bereits genannten und sulfonsäuregruppenhaltigen Ionenaustauscher in Frage, meist in wasserhaltiger Form; bevorzugt wird konz. Schwefelsäure verwendet, die das für die Reaktion nötige eine Äquivalent Wasser enthält. Die Mineralsäure selbst wird in mindestens äquimolarer Menge zu den Ausgangsverbindungen eingesetzt.

Die Salze der Phosphonsäure I werden nach üblichen Verfahren z.B. durch Umsetzung mit äquivalenten Mengen eines Metallhydroxids oder Carbonats aus wässriger oder alkoholischer Lösung hergestellt.

Als Metallhydroxide kommen Alkali-, Erdalkali-, Zink-, Aluminium- oder Eisenhydroxide, insbesondere Natrium- und Kaliumhydroxid oder auch gegebenenfalls durch ($C_1$–$C_4$)-Alkylreste substituierte Ammoniumhydroxide, insbesondere Ammoniumhydroxid selbst in Frage.

Als erfindungsgemässe Salze der Verbindungen I sind beispielsweise folgende zu nennen: Mononatriumsalz, Monokaliumsalz, Monolithiumsalz, Monoammoniumsalz, Magnesiumsalz, Calciumsalz, Bariumsalz, Aluminiumsalz, Zinksalz, Eisensalz, Dinatriumsalz, Dikaliumsalz.

Die Verbindung der Formel I und ihre Salze sind ungewöhnlich hydrolysestabil und besitzen wertvolle Eigenschaften als Monomere zur Herstellung von Copolymeren. So weisen Copolymere aus 2-Methacrylamido-2-methylpropanphosphonsäure mit Acrylnitril eine verminderte Entflammbarkeit auf. Copolymere mit Acrylamid können als Färbereihilfsmittel und Copolymere mit Acrylsäure als Scale-Inhibitoren verwendet werden.

Beispiel 1

1041 g (5 mol) $PCl_5$ werden in 2,5 l wasserfreiem Toluol suspendiert und bei 10–15 °C 281 g

(5 mol) Isobuten eingeleitet. Man rührt 3 h bei 15 °C nach und leitet anschliessend bei 10–15 °C so lange $SO_2$ ein, bis eine klare Lösung entstanden ist.

Toluol und $SOCl_2$ werden abdestilliert. Zur Abspaltung des Chlorwasserstoffs wird der Rückstand 8 h unter Zusatz von 3 g Triphenylphosphan bei 270 mbar auf 180 °C erhitzt.

Die Destillation liefert 660 g eines Gemisches der isomeren 2-Methyl-propen-phosphonsäure-dichloride.

$Kp_{16mbar}$ = 90–93 °C. Ausbeute: 76,3%.

500 g (2,89 mol) 2-Methyl-propen-phosphonsäure-dichlorid werden bei 20 °C in eine Lösung von 231 g (5,78 mol) Natriumhydroxid in 600 ml Wasser getropft. Man dampft im Vakuum vollständig ein und extrahiert die Phosphonsäure mit 1000 ml Aceton. Die Natriumchloridrückstände werden mit 2×500 ml Aceton nachgewaschen, die vereinigten Filtrate im Vakuum eingedampft und schliesslich 4 h am Hochvakuum bei 50 °C getrocknet.

Ausbeute 388 g (98,5% d.Th.).

100 g (0,735 mol) der oben erhaltenen 2-Methyl-propen-phosphonsäure (Isomerengemisch) werden mit 0,5 g Phenothiazin und 98 g (1,47 mol) Methacrylnitril versetzt und eine Mischung aus 75,8 g (0,735 mol) Schwefelsäure (97%ig) und 13,2 g (0,735 mol) Wasser bei 20–30 °C zugetropft. Man hält das Reaktionsgemisch zunächst 16 h bei 25–30 °C, erwärmt dann innerhalb 4 h auf 60 °C und hält diese Temperatur weitere 16 h. Der erkaltete Rückstand wird in 500 ml Wasser aufgerührt, 58,8 g (1,47 mol) Natriumhydroxid in 100 ml Wasser zugegeben und dann das Wasser im Vakuum weitgehend abdestilliert. Man extrahiert den Rückstand 3× mit 250 ml Isobutanol, dampft die Isobutanolphase im Vakuum vollständig ein und fällt 2-Methacrylamido-2-methyl-propan-phosphonsäure durch Zugabe von 1000 ml Aceton.

Ausbeute 109 g =67% d.Th. Fp.: 149–151 °C.

Beispiel 2

45 g (0,33 mol) 2-Methyl-propen-phosphonsäure (nach Beispiel 1) werden mit 200 mg Phenothiazin und 22,1 g (0,33 mol) Methacrylnitril versetzt. Dann wird eine Mischung aus 33,3 g (0,33 mol) Schwefelsäure (97%ig) und 5,9 g (0,33 mol) Wasser bei 20 °C zugetropft. Nach 16 h bei 20–30 °C steigert man die Temperatur innerhalb 4 h bis auf 60 °C und hält diese Temperatur weitere 16 h bei. Danach wird der abgekühlte Reaktionsansatz in einer Mischung aus 21 g Wasser und 200 ml Methanol gelöst und die Schwefelsäure durch Zugabe einer Lösung aus 26,4 g (0,66 mol) NaOH, 21 ml Wasser und 200 ml Methanol neutralisiert. Das Natriumsulfat wird abfiltriert und das Filtrat im Vakuum vollständig eingedampft. Durch Zugabe von 250 ml Aceton wird 2-Methacrylamido-2-methyl-propan-phosphonsäure gefällt.

Ausbeute 44,3 g (60,5% d.Th.).

Beispiel 3

In einem 2 l Polymerisationskolben mit Rührer, Rückflusskühler, Gaseinleitungsrohr und elektrisch beheiztem Wasserbad werden 500 ml entionisiertes Wasser vorgelegt, unter Rühren und Einleiten von Stickstoff 80 g Acrylamid und 10 g 2-Methylacrylamido-2-methylpropan-phosphonsäure (MAMPP) aufgelöst. Es werden noch 5 ml Isopropanol zugesetzt und dann die Temperatur im Kolben auf 70 °C gebracht. Nun wird eine Lösung von 0,25 g Ammoniumperoxodisulfat in 10 ml Wasser im Verlauf von 10 Minuten zugetropft, wobei die Temperatur des Reaktionsgemisches auf 75 °C ansteigt. Nach Absinken der Temperatur wird noch 2 Stunden bei 80 °C Badtemperatur nachgerührt. Man erhält eine klare viskose Lösung mit einem pH 2,21 und einer Brookfieldviskosität von 12172 cp.

Ein Gewebe bestehend aus 50% Polyester und 50% Baumwolle wird auf einem Foulard mit einer Flottenaufnahme von 60% mit nachstehender Flotte imprägniert:

15 g Disperse Bed 90
15 g Vat Ped 51
10 g der gemäss obiger Vorschrift hergestellten Polymerlösung
960 g Wasser

und auf einem Spannrahmen getrocknet. Man erhält eine Imprägnierung von höchster Übereinstimmung der Farbtiefe auf der Ober- und Unterseite des Gewebes.

Beispiel 4

Ein Copolymerisat aus 50 Gew.-Teilen 2-Methacrylamido- 2 -methylpropanphosphonsäure und 50 Gew.-Teilen Acrylsäure wurde durch radikalisch initiierte Lösungspolymerisation in einem Wasser/Isopropanol- Gemisch bei 85 °C hergestellt.

Das resultierende Copolymerisat mit einem K-Wert von 18 (nach Fikentscher) wurde gemäss NACE-Standard TM-03-74 (NACE = National Association of Corrision Engineers 14 40 South Creek, HOUSTON, TX) als Scale-Inhibitor zur Verhinderung von Calciumsulfat- und Calciumcarbonat-Ausfällungen in wässrigen Lösungen geprüft.

Bei Zusatz von 10 ppm Polymer gemäss Testanordnung wurde ein handelsübliches Produkt der Bezeichnung ACRYLRON A002 der Firma PROTEX gegen ein erfindungsgemässes Copolymerisat oben genannter Zusammensetzung geprüft.

| | Copolymer MAMPP-Acrylsäure | ACRYLRON A 002 |
|---|---|---|
| Ca-sulfat-Retentionswert | 4 872 mg/l | 3 833 mg/l |
| Ca-carbonat-Retentionswert | 3 711 mg/l | 2 965 mg/l |

**Patentansprüche für die Vertragsstaaten BE, CH, DE, FR, GB, IT, LI, NL, SE**

1. Methacrylamido-2-methyl-propanphosphonsäure der Formel

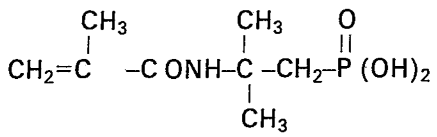

und ihre Salze.

2. Verfahren zur Herstellung der 2-Methacrylamido-2- methyl- propan- phosphonsäure, dadurch gekennzeichnet, dass man 2-Methylprop-1-en-1-phosphonsäure oder 2-Methylprop-2-en-1-phosphonsäure oder Gemische dieser Säuren mit Methacrylnitril in Gegenwart einer mindestens äquimolaren Menge einer starken Säure umsetzt.

3. Verwendung von 2-Methacrylamido-2-methyl-propanphosphonsäure und deren Salze als Comonomere in Copolymerisaten.

**Patentansprüche für den Vertragsstaat AT**

1. Verfahren zur Herstellung von 2-Methacrylamido-2- methyl- propan- phosphonsäure der Formel

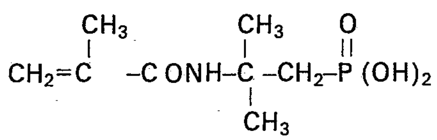

und ihrer Salze, dadurch gekennzeichnet, dass man 2-Methylprop-1-en-1-phosphonsäure oder 2-Methylprop-2-en-1-phosphonsäure oder Gemische dieser Säuren mit Methacrylnitril in Gegenwart einer mindestens äquimolaren Menge einer starken Säure umsetzt.

2. Verwendung von 2-Methacrylamido-2-methyl-propanphosphonsäure und deren Salze als Comonomere in Copolymerisaten.

**Revendications pour les Etats contractants: BE, CH, LI, DE, FR, GB, IT, NL, SE**

1. Acide méthacryloylamino-2 méthyl-2- propane-phosphonique, lequel répond à la formule suivante:

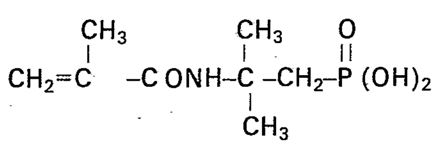

et sels de cet acide.

2. Procédé de préparation de l'acide méthacryloylamino-2 méthyl-2 propane-phosphonique, procédé caractérisé en ce qu'on fait réagir l'acide méthyl-2 propène-1 phosphonique-1 ou l'acide méthyl-2 propène-2 phosphonique-1, ou des mélanges de ces acides, avec le méthacrylonitrile en présence d'une quantité au moins équimolaire d'un acide fort.

3. Application de l'acide méthacryloylamino-2 méthyl-2 propane-phosphonique et de ses sels comme comonomères dans des produits de copolymérisation.

**Revendications pour l'état contractant AT**

1. Procédé de préparation de l'acide méthacryloylamino-2 méthyl-2 propane-phosphonique, qui répond à la formule suivante:

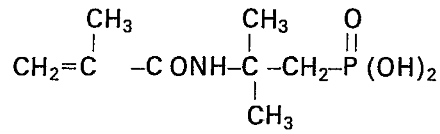

et de ses sels, procédé caractérisé en ce qu'on fait réagir l'acide méthyl-2 propène-1 phosphonique-1 ou l'acide méthyl-2 propène-2 phosphonique-1, ou des mélanges de ces acides, avec le méthacrylonitrile en présence d'une quantité au moins équimolaire d'un acide fort.

2. Application de l'acide méthacryloylamino-2 méthyl-2 propane-phosphonique et de ses sels comme comonomères dans des produits de copolymérisation.

**Claims for the contracting states: BE, CH, LI, DE, FR, GB, IT, NL, SE**

1. Methacrylamido-2-methylpropanephosphonic acid of the formula

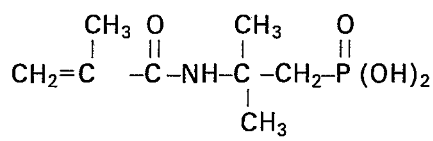 I

and the salts thereof.

2. A process for the preparation of 2-methacrylamido-2-methylpropanephosphonic acid, which comprises reacting 2-methylprop-1-ene-1-phosphonic acid or 2-methyl-prop-2-ene-1-phosphonic acid or mixtures of these acids with methacrylonitrile in the presence of an at least equimolar amount of a strong acid.

3. Method of use of 2-methacrylamido-2-methylpropanephosphonic acid and the salts thereof as comonomers in copolymers.

**Claims for the contracting state: AT**

1. A process for the preparation of 2-methacrylamido-2-methylpropanephosphonic acid of the formula

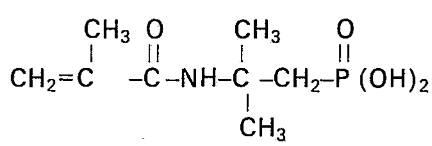 I

and the salts thereof, which comprises reacting 2-methylprop-1-ene-1-phosphonic acid or 2-methylprop-2-ene-1-phosphonic acid or mixtures of these acids with methacrylonitrile in the presence of an at least equimolar amount of a strong acid.

2. Method of use of 2-methacrylamido-2-methylpropanephosphonic acid and the salts thereof as comonomers in copolymers.